**Europäisches Patentamt**

(19) **European Patent Office**

**Office européen des brevets**

(11) Publication number: **0 005 706**
**B1**

(12) **EUROPEAN PATENT SPECIFICATION**

(45) Date of publication of patent specification: **12.05.82**

(51) Int. Cl.³: **F 16 C 33/76, F 16 J 15/32**

(21) Application number: **78850001.5**

(22) Date of filing: **05.06.78**

(54) Sealing device for bearings, especially roll bearings.

(43) Date of publication of application:
**12.12.79 Bulletin 79/25**

(45) Publication of the grant of the patent:
**12.05.82 Bulletin 82/19**

(84) Designated Contracting States:
**DE FR GB SE**

(56) References cited:
**FR - A - 2 296 800**
**GB - A - 881 607**
**US - A - 2 938 744**
**US - A - 3 135 518**
**US - A - 3 685 841**
**US - A - 4 037 848**
**US - E - 24 940**

(73) Proprietor: **STEFA INDUSTRI AKTIEBOLAG**
**Kungsgatan 16**
**261 31 Landskrona (SE)**

(72) Inventor: **Klinteberg, Gustav Rune**
**Myntstigen 8**
**261 61 Landskrona (SE)**
Inventor: **Johansson, Nils Ake Bertil**
**Maskrosrägen 8**
**261 71 Landskrona (SE)**
Inventor: **Johansson, Bert Lennart Ingmar**
**Trancellsgatan 83**
**261 35 Landskrona (SE)**
Inventor: **Dahlgren, Christer Harald**
**Agatan8**
**268 00 Svalöv (SE)**

(74) Representative: **Avellan-Hultman, Bengt**
**Hultmans Patentbyra Aktiebolag Jungfrugatan 16**
**P.O. Box 5165**
**Stockholm 5 (SE)**

Courier Press, Leamington Spa, England.

Sealing device for bearings, especially roll bearings

The present invention refers to a sealing device for bearings in rotational apparatus and machines, in which either a shaft rotates within a hub or a hub rotates in relation to a shaft, or possibly both of these parts rotate. For such bearings, to a great extent ball bearings or roll bearings are used, which should be well embedded in oil or grease. In bearings of this type it is desired to avoid leakage of the grease or the oil to the surroundings outside of the bearing but it is also important to avoid foreign particles from entering into the ball or roll bearing, respectively.

The G.B. patent specification 881,607 describes a sealing device for bearings having two sealings in series in the form of elastomeric bodies in contact with smooth surfaces, one of said sealing rings being positioned so that it will in first place prevent leakage of oil or grease to the outside, the other sealing ring in first place preventing foreign rigid particles from entering the bearing.

Of course, the two sealing rings will also, each *per se* function as a security in the specific respect for which the other sealing functions in first place.

Both of the sealing rings have at least one sealing lip contacting the smooth cylindric surface.

The bearing according to said G.B. patent specification, however, is constructed in such a way that the peripheral speed of movement between at least one of the sealing lips and the cylindrically shaped contacting part will be very high as compared with the speed of rotation, and this, in turn, has caused a strong wearing.

Bearings of this type, necessarily, will comprise rather a lot of parts, viz. not only the two elastomeric rings and the two metallic parts with smooth surfaces against which the elastomeric rings are in contact but rather often, in addition thereto, some protection parts. Both the elastomeric rings and the metallic surfaces contacted by said elastomeric rings, thus, will be subject to wearing. Earlier, it was regarded, desirable that each of the sealing parts should be easily replaceable. Replacing such worn out parts made it necessary that all of the bearing device was mounted in the place, where it was built into the machine, for instance a cargo automobile.

Investigations forming basis of the present invention, now, have proved that the wearing of the elastomeric rings as well as of the metallic surfaces is promoted, to a great extent, if these parts are not mounted into the exactly correct position in relation to each other when mounting them into the bearing, and this especially applies to their position in axial direction. It has also proved that if the sealing device is mounted into the machine concerned in the machinery workshop where the repair is made, the mounting is often made in an incorrect way. This may depend upon lack of skill with the worker but still more because he usually has not at his disposal such alignment securing devices as jigs or the like which are, however, available to the manufacturer of the bearing and sealing device. Therefore, the present invention is based upon the conception that the sealing device should be constructed in such a way that it may be delivered to the manufacturer of the machine as a unit, so that the parts of the sealing device should not be mounted together in his workshop, even if such a joining into one single unit would mean that some single part worn out can no longer be replaced but all of the sealing device will have to be replaced.

By making the sealing device in the form of such a closed unit also other advantages are gained, causing the useful life time of the sealing device to be longer. Therefore, it will be economically defendable to make the sealing device in the form of a closed unit, even if it will thereafter not be possible to replace some single part thereof. Amongst such advantages the following ones may be mentioned:

By joining the sealing device parts into a closed unit, one will get a possibility to place both of the elastomeric rings as well as the metallic parts contacted by them under sealed conditions so that these parts are well protected against damages during transport, storing or other handling.

The dimensions, especially those in axial direction, of the unit will be less than the corresponding dimensions of a device having replaceable parts, which will make it possible to construct the machine with a shorter distance between the bearing and the part of the shaft subjected to strain and in this way to get a higher rigidity.

By said joining the possibility of removing heat created in the unit will be improved. This removal will be still more improved by providing protection means to enclose the parts of the unit in some suitable way. Heat generated by friction between the elastomeric ring and its contact surface thereby being removed in a more advantageous way, as will be further explained below.

The invention, thus, refers to a sealing device for bearings, especially roll bearings, having two sealing places in series, each comprising a ring of an elastomere, preferably rubber, having a sealing lip in contact with a surface which is, at the place of sealing, cylindrical, and a metallic liner for each of the two sealing rings.

According to the invention one of the sealing rings is provided on the shaft of the bearing in which the sealing device is applied. Its sealing lip is placed close to the shaft and directed outwardly to contact the hub of the bearing. The liner, in turn, supports the second inwardly directed sealing lip which is applied on a greater distance from the shaft and is arranged to contact the outer surface of a liner of U-shaped profile, for the first mentioned sealing ring. The outer surface of said liner has a greater diameter than the branch of the first mentioned liner, in contact with the sealing lip. A protection shield is provided to cover the opening of said first mentioned liner adjacent to the bearing, and this protection shield is attached to said liner by the free edge of same being folded to embrace the edge of the protection shield.

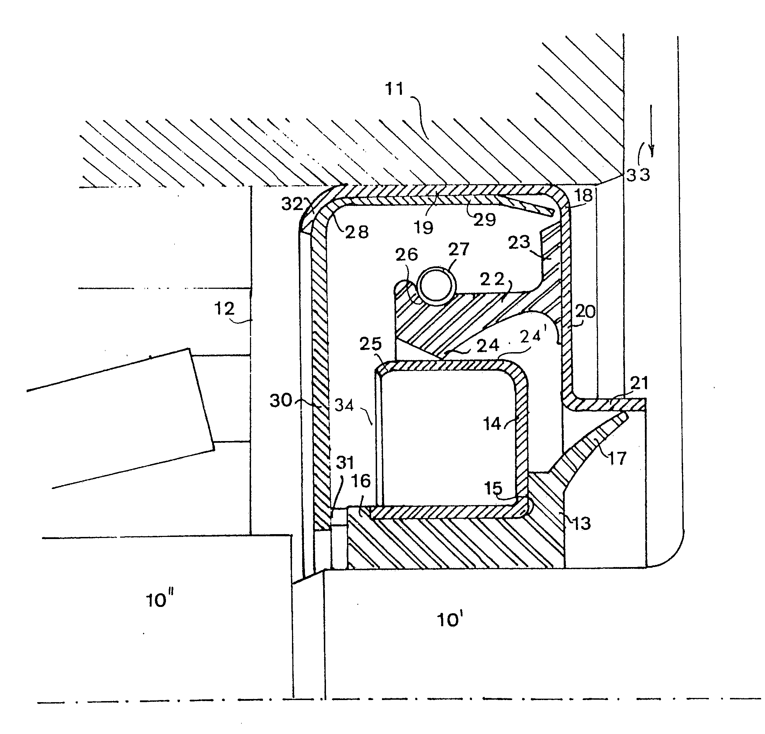

The invention will be further described below in connection with an embodiment shown in the attached drawing, but it is understood that the invention shall not be limited to this specific embodiment but that all different kinds of modifications may exist within the frame of the invention.

In the drawing, the shaft 10 may be rotatable within the hub 11. Also the reverse disposition, however, may apply, which means that the shaft is in stand still whereas the hub rotates, and finally, both of these parts may be rotatable, dependent upon the type of a machine, in which the bearing is used. The shaft comprises two parts 10' and 10" mutually connected, but it is of no importance to the present invention of what type the latter shaft part 10" is. As shown in the drawing, it may for instance support the inner ring of a roll bearing, a ball bearing or the like. The shaft part 10', however, supports the sealing device according to the present invention. The bearing is only schematically indicated in the drawing by means of the contour 12.

On the shaft part 10' an elastomeric ring is mounted. This ring, preferably, on its interior side has a wave shaped profile which will give a good bond to the surface of the shaft part 10', but this details is known *per se* and does not form part of the present invention. The elastomeric ring 13, in some suitable way, is attached to a liner, preferably by vulcanization, said liner comprising a metallic ring or annular body of a profile like a U and with its opening turned onto the bearing 12. To give better reliability to the bond between the elastomeric ring 13 and the liner 14, the elastomeric ring is shaped with a cavetto or junction 15, and the rounded part of the liner is disposed in this junction 15, a flange 16 extending from the ring 13 against which the edge of the liner 14 rests. The elastomeric ring 13 supports one of the sealing lips 17 which is directed outwardly.

There is also a second liner 18 in the hub 11. This liner 18 comprises a cylindric part 19, the outside of which is in contact with the interior of the hub 11, and an annular radial part 20 which is, with its inner edge turned to form a cylindrical flange 21. The sealing lip 17 is in contact with this flange 21. The profile of the liner 18, thus, is like a Z.

The second sealing lip 22 is attached to the flat annular part 20 of the liner 18, preferably by said sealing lip being provided with a flat annular foot 23 attached by vulcanization to said annular part 20 of the liner 18. The sealing lip 22, mainly, extends cylindrically out from the inner side of the annular part of the liner 20. It has an inwardly directed edge 24 in contact with the outer surface 24' of the U-shaped liner 14. This outer surface 24', preferably, is ground in order to provide a good sealing. For providing the required sealing pressure the sealing lip has a groove 26 in which a screw wound spring 27 is introduced to run around the sealing lip.

A protection shield of L-shaped profile 28 is applied on the side of the liner 18 opposite to the cylindrical part 20. This protection shield 28 comprises a cylindrical part 29, well in contact with the interior side of the part 19 of the outer liner 18 and a radial part 30 extending inwardly so that its edge will be close to the surface of the shaft 10'.

When joining the sealing parts according to the invention, one has to push the liner 14 along with its elastomeric part 13 into said liner 18, so that the sealing lip 17 will contact the interior side of the flange 21 of the liner 20. Thereby, automatically, the sealing lip 22 will be correctly positioned in relation to the outer cylindrical surface 24' of the liner 14. Either before or after this joining one has to introduce the spring 27 into its groove 26.

Thereafter, the protection shield 28 is put in place, its position being established by joggles 31 on the elastomeric ring 13, said joggles being distributed in some suitable way around the circumference of the elastomeric ring 13. After mounting the protection shield 30, the edge of the outer liner 18 is folded over the edge of the protection shield, as shown at 32.

Now, it is obvious, that one will in this way get a compressed unit comprising both of the sealings proper at the lips 17 and 22 and that these lips will be correctly positioned in relation to their contact surfaces so that the best possible sealing effect will be obtained. The bearing 12 usually comprises oil or grease the latter one by heating turning over into a more or less liquid consistency. It is imperative that these lubrications means must not leak out of the bearing 12. This is prevented, in first place, by the sealing lip 22 due to its contact with the surface 24'. If, in spite of this, some lubrications means should leak out past the said sealing, these lubrication means will be prevented from deviating by the sealing existing between the lip 17 and the metallic surface contacted by same. The last mentioned sealing, on the other side, is intended, in first place, to prevent rigid particles from penetrating the sealings and to get into the bearing, in first place in the direction of the arrow 33, but also here applies that if due to some lack of function rigid particles should nevertheless pass the sealing lip 17, then they will, nevertheless, not pass the sealing lip 23. In this connection, it should be reminded about that sealing devices of the present type are preferably used as sealings for wheel shafts in automobiles, and, just in such a case, it is especially important that no road gravel or similar rigid particles find their way into the bearing.

It cannot be avoided that heating is created by friction in the sealing surfaces proper, and this heat must be removed in one way or another in order that the elastomere in the sealing place shall not be damaged. The lip 17 contacts the outer liner which is made from metal and which is, therefore, a good heat conductor, and the heat, therefore, will be removed in a satisfactory way to the hub 11. It is true that there is no corresponding removal of heat at the sealing lip 24, but here, instead, the contact surface is well cooled by the oil or lubrication means passing, under the influence of the centrifugal force, between the joggles 31 in order, thereafter, to be thrown into the space inside of the interior liner 14 through its circular opening 34 so that it will be subjected to whirl movements inside of the said liner.

By the present invention, thus, the advantage of earlier constructions is given up that some single part which has got used up by wearing may easily be replaced, but, in compensation thereof, the advantage is gained of a very simple mounting because both of the sealing places are positioned in one single unit, and this unit consumes less volume, especially in axial direction, than was possible with the known constructions, and all of the sealing unit may be manufactured in the factory manufacturing the sealing parts whereby it is made possible to ensure that the sealing lips 17 and 22 will correctly and advantageously contact chosen places of the metallic surfaces. This will give a better sealing effect and longer life time to the parts of the sealing device. To this adds that all of the sealing device is well covered whereby leakage of lubrication means is avoided and rigid particles and other impurities are prevented from entering the device.

## Claims

1. A sealing device for bearings, especially roll bearings (12) having two sealing places in series each comprising a ring (13, 22) of an elastomer, preferably rubber, provided with a sealing lip (17, 24) in contact with a surface which is, at the place of the sealing, cylindrical, and a metallic liner (14, 18) for each of the two sealing rings (13, 22), characterized thereby that one sealing ring (13) is provided on the shaft (10) of the bearing (12) in which the sealing device is used, that its sealing lip (17) is arranged adjacent to the shaft and directed outwardly to contact a branch (21) of one liner (18) connected to the hub (11) of the bearing, said liner (18) in turn supporting the second inwardly directed sealing lip (22) which is arranged at a greater distance from the shaft than the first sealing lip (17) and is in contact with the outer surface of the liner (14) for the first mentioned sealing ring (13), said liner (14) being U-shaped in profile, that said outer surface (24') of said liner (14) has a larger diameter than said branch (21) of said first mentioned liner (18), and that a protection shield (30) is provided to cover the opening of said first mentioned liner (18) adjacent to the bearing (12), said protection shield being attached to said first mentioned liner (18) by the free edge (32) of same being folded to embrace the edge of the protection shield (30).

2. A sealing device according to claim 1, characterized thereby, that the liner (14) of U-shaped profile is placed with one of its cylindrical shanks in a groove in the first mentioned sealing ring (13).

3. A sealing device according to claim 1 or 2, characterized thereby, that said first mentioned sealing ring (13) is provided, at the end of same remote from sealing lip (17) with axially directed joggles (31) distributed around the periphery of the sealing ring against which the protection shield (30) rests.

4. A sealing device according to any of the above claims, characterized thereby, that the first mentioned liner (18) is of Z-shaped profile, one part (21) of which is parallel to the shaft (10), said first mentioned sealing lip (17) contacting said part (21) of the liner, an intermediate part (20) of which is at least substantially perpendicular to the shaft (10), and one further part (19) being parallel to the shaft (10), the free edge (32) of said last mentioned part (19) being folded around a bent part (28) of the protection shield (30).

5. A sealing device according to claim 3 or 4, characterized thereby, that the protection shield (30) has an L-shaped profile containing an outer cylindrical part (29) substantially in parallel to the shaft (10) and an at least substantially flat radially directed part (30) in touch with the joggles (31) provided on the inner sealing ring (13).

6. A sealing device according to any of the above claims, characterized thereby, that the outer sealing lip (24) is, on its outer side, provided with a groove (26) running all around said sealing lip (24) in which a compression spring (27) rests to create the sealing pressure.

## Revendications

1. Un dispositif d'étanchéité pour paliers, notamment de roulements (12) à rouleaux, ayant deux emplacements d'étanchéité en série comprenant chacun une bague (13, 22) en un élastomère, de préférence du caoutchouc, munie d'une lèvre d'étanchéité (17, 24) en contact avec une surface qui à l'emplacement de l'étanchéité est cylindrique et un manchon métallique (14, 18) pour chacune des deux bagues d'étanchéité (13, 22), caractérisé par le fait qu'une bague d'étanchéité (13) est montée sur l'arbre (10) du palier (12) dans lequel le dispositif d'étanchéité est utilisé, que sa lèvre d'étanchéité (17) est disposée adjacente à l'arbre et dirigée vers l'extérieur pour être en contact avec une branche (21) d'un premier manchon (18) assemblé au moyeu (11) du palier, ledit manchon (18) portant à son tour la seconde lèvre d'étanchéité (24) dirigée vers l'intérieur, qui est disposée à une plus grande distance de l'arbre que la première lèvre d'étanchéité (17) et est en contact avec la surface extérieure du manchon (14) pour la bague d'étanchéité (13) mentionnée en premier lieu, ledit manchon (14) ayant une forme en U, en profil, que ladite surface extérieure (24') dudit manchon (14) a un plus grand diamètre que ladite branche (21) du manchon (18) mentionné en premier lieu et qu'un écran de protection (28) est prévu pour couvrir l'ouverture du manchon (18) mentionné en premier lieu adjacente au palier (12), ledit écran de protection étant attaché au manchon (18) mentionné en premier lieu par le bord libre (32) de ce dernier qui est replié pour enserrer le bord de l'écran de protection (28).

2. Un dispositif d'étanchéité selon la revendication 1, caractérisé par le fait que le manchon (14) à profil en forme de U est placé avec l'une de ses tiges cylindriques dans une rainure formée dans la bague d'étanchéité (13) mentionnée en premier lieu.

3. Un dispositif d'étanchéité selon la revendication 1 ou 2, caractérisé en ce que ladite bague d'étanchéité (13) mentionnée en premier lieu est munie, à son extrémité éloignée de la lèvre d'étanchéité (17), de dents (31) axialement dirigées, réparties autour de la périphérie de la bague d'étanchéité, contre lesquelles l'écran de protection (28) repose.

4. Un dispositif d'étanchéité selon l'une quelconque des revendications précédentes, caractérisé en ce que le manchon (18) mentionné en premier lieu a un profil en forme de Z dont une partie (21) est parallèle à l'arbre (10), ladite lèvre d'étanchéité (17) mentionnée en premier lieu étant en contact avec ladite partie (21) du manchon, dont une partie intermédiaire (20) est au moins sensiblement perpendiculaire à l'arbre (10), une partie supplémentaire (19) étant parallèle à l'arbre (10), l'extrémité libre (32) de ladite partie (19) mentionnée en dernier lieu étant repliée autour d'une partie cintrée de l'écran de protection (28).

5. Un dispositif d'étanchéité selon la revendication 3 ou 4, caractérisé par le fait que l'écran de protection (28) a un profil en forme de L comprenant une partie cylindrique extérieure (29) sensiblement parallèle à l'arbre (10) et une partie (30) dirigée radialement au moins sensiblement plate, en contact avec les dents (31) formées sur la bague d'étanchéité intérieure (13).

6. Un dispositif d'étanchéité selon l'une quelconque des revendications précédentes, caractérisé par le fait que la lèvre d'étanchéité extérieure (24) est, sur sa face extérieure, munie d'une rainure (26) qui s'étend tout autour de ladite lèvre d'étanchéité (24), dans laquelle un ressort de compression (27) repose pour créer la pression d'étanchéité.

## Patentansprüche

1. Dichtungsvorrichtung für Lager, insbesondere Wälzlager (12), mit zwei hintereinander angeordneten Dichtstellen, von denen jede einen Dichtring (13, 22) aus einem Elastomer, vorzugsweise Gummi, mit einer Dichtlippe (17, 24) aufweist, die in Verbindung mit einer an der Dichtstelle zylindrischen Fläche steht, und mit einer metallischen Einlage (14, 18) für jeden der beiden Dichtringe (13, 22), dadurch gekennzeichnet, daß ein Dichtring (13) auf der Welle (10) des Lagers (12), in welchem die Dichtungsvorrichtung verwendet wird, angeordnet ist und mit seiner Dichtlippe (17) nahe der Welle (10) nach außen ragt und einen Zweig (21) einer an der Nabe (11) des Lagers (12) festgelegten Einlage (18) berührt, die ihrerseits die zweite, nach innen gerichtete und in einem größeren Abstand von der Welle (10) als die erste Dichtlippe (17) angeordnete Dichtlippe (24) trägt, die die äußere Oberfläche der Einlage (14) des erstgenannten Dichtringes (13) berührt, wobei die letztgenannte Einlage (14) ein U-Profil und ihre äußere Oberfläche (24') einen größeren Durchmesser als der Zweig (21) der erstgenannten Einlage (18) aufweist, und daß ein die dem Lager (12) zugekehrte Öffnung der erstgenannten Einlage (18) verdeckender Schutzschild (30) vorgesehen ist, der an der erstgenannten Einlage (18) dadurch festgelegt ist, daß deren äußerer Rand (32) den Rand des Schutzschildes (30) umgreifend eingebördelt ist.

2. Dichtungsvorrichtung nach Anspruch 1, dadurch gekennzeichnet, daß die U-profilförmige Einlage (14) mit einem ihrer beiden zylindrischen Schenkel in einer Nute des erstgenannten Dichtringes (13) festgelegt ist.

3. Dichtungsvorrichtung nach Anspruch 1 oder 2, dadurch gekennzeichnet, daß der erstgenannte Dichtring (13) an seinem der Dichtlippe (17) abgekehrten Ende entlang seinem Umfang verteilt axiale Zapfen (31) trägt, an denen der Schutzschild (30) anliegt.

4. Dichtungsvorrichtung nach einem der vorhergehenden Ansprüche, dadurch gekennzeichnet, daß die erstgenannte Einlage (18) ein Z-Profil mit einem parallel zur Welle (10) verlaufenden Zweig (21), an dem die erstgenannte Dichtlippe (17) anliegt, mit einem im wesentlichen quer zur Welle (10) verlaufenden mittleren Teil (20) und mit einem weiteren, parallel zur Welle (10) verlaufenden Teil (10) aufweist, dessen äußerer Rand (32) um einen gekrümmten Teil (28) des Schutzschildes (30) herum eingebördelt ist.

5. Dichtungsvorrichtung nach Anspruch 3 oder 4, dadurch gekennzeichnet, daß der Schutzschild (30) ein L-Profil aufweist mit einem im wesentlichen parallel zur Welle (10) verlaufenden äußeren zylindrischen Teil (29) und mit einem zumindest im wesentlichen flachen radial verlaufenden Teil, der die am inneren Dichtring (13) befindlichen Zapfen (31) berührt.

6. Dichtungsvorrichtung nach einem der vorhergehenden Ansprüche, dadurch gekennzeichnet, daß die äußere Dichtlippe (24) an ihrer Außenseite mit einer sie umgebenden Ringnute (26) versehen ist, in der eine den Dichtdruck erzeugende Druckfeder (27) gelagert ist.